# EUROPÄISCHE PATENTANMELDUNG

(11) **EP 4 332 766 A1**
(43) Veröffentlichungstag der Anmeldung: **06.03.2024**
(21) Anmeldenummer: 22192677.7
(22) Anmeldetag: 29.08.2022
(51) Int. Cl.: G06F 9/50

(54) **VERFAHREN ZUR RECHNERGESTÜTZTEN BESCHRÄNKUNG VON PERSISTENTEM SPEICHER FÜR EINE CONTAINER-BASIERTE APPLIKATION**

(71) Anmelder: Siemens Aktiengesellschaft, 80333 München (DE)
(72) Erfinder: Albrecht, Harald, 90475 Nürnberg (DE); Feist, Christian Peter, 80689 München (DE); Knierim, Christian, 81373 München (DE)
(74) Vertreter: Siemens Patent Attorneys

(57) **Zusammenfassung**

Die Erfindung betrifft ein Verfahren zur rechnergestützten Beschränkung von persistentem Speicher für eine containerbasierte Applikation (AP), wobei der Applikation (AP) eine Anzahl von Container-Instanzen (CIN1, CIN2) zugeordnet ist, wobei in der Anzahl von Container-Instanzen (CIN1, CIN2) eine Anzahl von ersten Benutzern (UC1, UC2) enthalten ist, wobei ein jeweiliger erster Benutzer (UC1, UC2) ein containerspezifischer Benutzer in einer entsprechenden Container-Instanz (CIN1, CIN2) ist, wobei:
- zur Konfiguration der Anzahl von Container-Instanzen (CIN1, CIN2) eine Konfigurationsinformation (CO) bereitgestellt wird, welche für jeden ersten Benutzer (UC1, UC2) eine Speicherbegrenzung an persistentem Speicher auf zumindest einer Speicherpartition des vorgegebenen Betriebssystems (OS) festlegt;
- bei der Konfiguration der Anzahl von Container-Instanzen (CIN1, CIN2) eine Benutzer-Zuordnung (UAS) festgelegt wird, gemäß der jedem ersten Benutzer (UC1, UC2) ein anderer zweiter Benutzer (UOS1, UOS2) im vorgegebenen Betriebssystem (OS) zugeordnet ist, der über die Anzahl von Container-Instanzen (CIN1, CIN2) eindeutig ist und für den die Speicherbegrenzung des jeweiligen ersten Benutzers (UC1, UC2) gültig ist;
- die Anzahl von Container-Instanzen (CIN1, CIN2) basierend auf der Benutzer-Zuordnung (UAS) gestartet werden, wobei mithilfe des oder der zweiten Benutzer (UOS1, UOS2) die Speicherbegrenzung für jeden ersten Benutzer (UC1, UC2) eingehalten wird.

## Beschreibung

Die Erfindung betrifft ein Verfahren zur rechnergestützten Beschränkung von persistentem Speicher für eine container-basierte Applikation sowie ein entsprechendes Computerprogrammprodukt und ein entsprechendes Computerprogramm.

Aus dem Stand der Technik ist es bekannt, ausführbare Programme in der Form von Applikationen in einem oder mehreren Containern zu hinterlegen, wodurch eine geeignete Kapselung der Applikation erreicht wird. Hierfür gibt es Containerisierungstechnologien, wie z.B. die Software "Docker" für das Betriebssystem Linux.

Für die Ausführung einer container-basierten Applikation aus einem oder mehreren Containern werden entsprechende Container-Instanzen für die jeweiligen Container konfiguriert, die bei Ausführung der Applikation gestartet werden.

Oftmals besteht die Notwendigkeit, die von einer container-basierten Applikation erzeugten Daten zu persistieren, d.h. in einem nicht-flüchtigen Speicher zu hinterlegen, so dass die Daten für bestimmte Geräte (wie z.B. Sensoren) oder andere Applikationen zur Verfügung stehen.

Um Daten innerhalb einer Container-Instanz zur Laufzeit einer Applikation zu persistieren, kann eine persistente Speicherpartition des darunter liegenden Betriebssystems in den Container eingebunden bzw. gemountet werden, so dass die zugehörige container-basierte Applikation auf der persistenten Speicherpartition Änderungsoperationen durchführen kann. Üblicherweise wird die persistente Speicherpartition von unterschiedlichen Container-Instanzen geteilt. Durch die Verwendung von Quellverzeichnissen innerhalb der Speicherpartition, auf welche immer nur eine einzelne Container-Instanz Zugriff hat, kann zwar gesteuert werden, dass die Container-Instanzen nicht in das gleiche Verzeichnis schreiben. Nichtsdestotrotz besteht das Problem, das eine oder mehrere Container-Instanzen weiterhin die komplette Speicherpartition allokieren können und dann kein persistenter Speicherplatz für andere Container-Instanzen zur Verfügung steht, welcher somit keine Daten mehr persistieren können.

Derzeit gibt es keine adäquaten Lösungen, um den persistenten Speicher für Container-Instanzen einer Applikation zu beschränken. Zwar besteht die Möglichkeit, separate Speicherpartitionen für einzelne Container-Instanzen festzulegen, jedoch ist es hierbei nachteilhaft, dass die Anzahl von erzeugbaren Speicherpartitionen begrenzt ist und die Prozesse zur Erzeugung der Speicherpartitionen sehr aufwändig sind.

Darüber hinaus gibt es im Stand der Technik die Möglichkeit, den Speicherbedarf auf einer Speicherpartition über sog. Disk-Quotas zu regeln, welche Speicherbegrenzungen für Benutzer bzw. Benutzergruppen auf einem Dateisystem eines Betriebssystems definieren. Disk-Quotas sind jedoch nicht zur Begrenzung von persistentem Speicher für Container-Instanzen vorgesehen.

Aufgabe der Erfindung ist es, ein Verfahren zu schaffen, mit dem auf einfache Weise persistenter Speicher für eine container-basierte Applikation beschränkt werden kann.

Diese Aufgabe wird durch das Verfahren gemäß Patentanspruch 1 bzw. das Computerprogrammprodukt gemäß Patentanspruch 11 bzw. das Computerprogramm gemäß Patentanspruch 12 gelöst. Weiterbildungen der Erfindung sind in den abhängigen Ansprüchen definiert.

Das erfindungsgemäße Verfahren dient zur rechnergestützten Beschränkung von persistentem Speicher für eine container-basierte Applikation. Container-basierte Applikationen sind an sich aus dem Stand der Technik bekannt. Einer container-basierten Applikation sind eine Anzahl von Container-Instanzen (d.h. eine oder mehrere Container-Instanzen) zugeordnet, welche im Rahmen des erfindungsgemäßen Verfahrens konfiguriert werden und anschließend zur Ausführung der Applikation auf einem vorgegebenen Betriebssystem gestartet werden. Wird beispielsweise als vorgegebenes Betriebssystem Linux verwendet, können die Container-Instanzen mittels der an sich bekannten Containerisierungstechnologie "Docker" erzeugt werden.

In der Anzahl von Container-Instanzen ist eine Anzahl von ersten Benutzern (d.h. ein oder mehrere erste Benutzer) enthalten, mit denen jeweils zumindest ein Prozess in der Anzahl von Container-Instanzen nach deren Start ausgeführt wird. Ein jeweiliger erster Benutzer ist ein container-spezifischer Benutzer in einer entsprechenden Container-Instanz aus der Anzahl von Container-Instanzen. Die Festlegung von container-spezifischen Benutzern mit entsprechenden Benutzeridentitäten, die für die Ausführung einer oder mehrerer Prozesse in einer Container-Instanz zuständig sind, ist an sich aus dem Stand der Technik bekannt. Der erste Benutzer ist dabei ein (nicht-menschlicher) technischer Benutzer, dem eine entsprechende Berechtigung für die Ausführung von einem oder mehreren Prozessen der entsprechenden Container-Instanz gegeben wird.

Im Rahmen des erfindungsgemäßen Verfahrens wird bzw. ist zur Konfiguration der Anzahl von Container-Instanzen eine Konfigurationsinformation bereitgestellt, welche für jeden ersten Benutzer eine Speicherbegrenzung an persistentem Speicher auf zumindest einer Speicherpartition des vorgegebenen Betriebssystems festlegt. Der Begriff der Speicherbegrenzung ist dabei weit zu verstehen. Die Speicherbegrenzung kann z.B. durch die direkte Angabe einer maximalen Speichergröße gegeben sein. Ebenso kann die Speicherbegrenzung mittelbar z.B. dadurch definiert werden, dass nur eine bestimmte Anzahl von Dateien und/oder nur Dateien bis zu einer bestimmten Größe in den entsprechenden persistenten Speicher geschrieben werden dürfen. Eine Speicherbegrenzung kann für einen jeweiligen ersten Benutzer ggf. auch über eine Benutzergruppe definiert werden. Dabei ist der Speicher für alle ersten Benutzer, die der gleichen Benutzergruppe angehören, beschränkt.

In dem erfindungsgemäßen Verfahren wird bei der Konfiguration der Anzahl von Container-Instanzen eine Benutzer-Zuordnung festgelegt, gemäß der jedem ersten Benutzer ein anderer zweiter Benutzer zugeordnet ist, der über die Anzahl von Container-Instanzen eindeutig ist und für den die Speicherbegrenzung des jeweiligen ersten Benutzers gültig ist. Ein jeweiliger zweiter Benutzer ist dabei ein Benutzer mit einer entsprechenden Benutzeridentität im vorgegebenen Betriebssystem, der in diesem Betriebssystem vor seiner Zuordnung zum ersten Benutzer nicht verwendet wurde bzw. vergeben war. Solche zweiten Benutzer können auf Betriebssystemebene z.B. mit dem oben beschriebenen Mechanismus von Disk-Quotas festgelegt werden.

Die Anzahl von Container-Instanzen wird schließlich basierend auf der oben beschriebenen Benutzer-Zuordnung gestartet. Dabei wird mittels des oder der zweiten Benutzer die Speicherbegrenzung für jeden ersten Benutzer für die Anzahl von gestarteten Container-Instanzen eingehalten. Mit anderen Worten wird beim Start der entsprechenden Container-Instanzen die Benutzer-Zuordnung beim Einhängen der Dateisysteme der Container-Instanzen in das Dateisystem des vorgegebenen Betriebssystems berücksichtigt, so dass die Speicherbegrenzung für einen jeweiligen zweiten Benutzer bei der Ausführung eines Prozesses durch den zugehörigen ersten Benutzer angewendet wird. Folglich wird einem ersten Benutzer ein Schreiben auf die entsprechende Speicherpartition nicht erlaubt, wenn die Speicherbegrenzung für diesen Benutzer überschritten ist.

Das erfindungsgemäße Verfahren hat den Vorteil, dass auf einfache Weise der persistente Speicher für eine container-basierte Applikation durch eindeutige Zuordnung von container-spezifischen Benutzern zu Betriebssystem-Benutzern begrenzt werden kann. Die Speicherbegrenzungen können dabei flexibel durch entsprechende Anpassungen in der Konfigurationsinformation verändert werden.

In einer bevorzugten Variante des erfindungsgemäßen Verfahrens ist in der Konfigurationsinformation zumindest ein Teil der ersten Benutzer der Anzahl von ersten Benutzern einer oder mehreren Benutzergruppen zugewiesen, wobei jeder Benutzergruppe die gleiche Speicherbegrenzung für alle darin enthaltenen ersten Benutzer zugewiesen ist. Mit anderen Worten gehört jeder erste Benutzer zumindest eines Teils der ersten Benutzer zu einer entsprechenden Benutzergruppe, wobei es eine oder mehrere Benutzergruppen geben kann. Mit dieser Ausführungsform kann die Konfigurationsinformation einfach strukturiert werden, da erste Benutzer mit der gleichen Speicherbegrenzung zu einer Gruppe zusammengefasst werden und somit nicht mehr separat für diese Benutzer die Speicherbegrenzung angegeben werden muss.

In einer weiteren bevorzugten Ausführungsform des erfindungsgemäßen Verfahrens ist in der Konfigurationsinformation die Speicherbegrenzung für einen jeweiligen ersten Benutzer der Anzahl von ersten Benutzern für ein oder mehrere Verzeichnisse eines container-spezifischen Dateisystems festgelegt, d.h. die Speicherbegrenzung bezieht sich auf ein oder mehrere Verzeichnisse innerhalb des entsprechenden Containers, auf welche der jeweilige erste Benutzer zugreifen darf. Dabei ist in der Konfigurationsinformation auch die zumindest eine Speicherpartition des vorgegebenen Betriebssystems spezifiziert, die dem Verzeichnis oder den Verzeichnissen des container-spezifischen Dateisystems entspricht. In einer alternativen Variante ist es auch möglich, dass in der Konfigurationsinformation die Speicherbegrenzung für einen jeweiligen Benutzer direkt die zumindest eine Speicherpartition des vorgegebenen Betriebssystems angibt.

Das erfindungsgemäße Verfahren ist für unterschiedliche Betriebssysteme einsetzbar. In einer bevorzugten Variante wird als vorgegebenes Betriebssystem jedoch Linux verwendet. Bei der Verwendung von Linux kann die oben beschriebene Benutzer-Zuordnung basierend auf dem aus diesem Betriebssystem bekannten Mechanismus von Usernamespaces festgelegt werden. Die Verwendung von Usernamespaces ist an sich bekannt. In der detaillierten Beschreibung wird näher auf diese Usernamespaces eingegangen.

In einer weiteren bevorzugten Ausgestaltung ist die Konfigurationsinformation eine bereitgestellte Standard-Konfigurationsinformation, falls keine andere Konfigurationsinformation für die container-basierte Applikation bereitgestellt wird. Auf diese Weise wird sichergestellt, dass eine Applikation mit Standardwerten von Speicherbegrenzungen gestartet wird, selbst wenn keine applikations-spezifische Konfigurationsinformation vorhanden ist.

In einer weiteren bevorzugten Ausgestaltung des erfindungsgemäßen Verfahrens wird bei der Festlegung der Benutzer-Zuordnung überprüft, ob die Speicherbegrenzung für einen jeweiligen ersten Benutzer der Anzahl von ersten Benutzern zulässig ist, wobei die Zulässigkeit basierend auf beliebigen Zulässigkeitskriterien festgelegt werden kann. Falls eine oder mehrere unzulässige Speicherbegrenzungen vorhanden sind, werden diese unzulässigen Speicherbegrenzungen in einer Variante verworfen, d.h. das Verfahren wird unter Nichtberücksichtigung der unzulässigen Speicherbegrenzungen fortgeführt. Alternativ können die unzulässigen Speicherbegrenzung auch durch zulässige Speicherbegrenzungen ersetzt werden. In einer weiteren Alternative ist es auch möglich, dass das Verfahren aufgrund der unzulässigen Speicherbegrenzungen abgebrochen wird.

Enthält die Konfigurationsinformation Speicherbegrenzungen basierend auf Verzeichnissen eines container-spezifischen Dateisystems, wie oben beschrieben wurde, liegen unzulässige Speicherbegrenzungen beispielsweise dann vor, wenn für zwei container-spezifische Verzeichnisse unterschiedliche Speichergrenzen angegeben werden, obwohl die Verzeichnisse auf der gleichen Speicherpartition liegen.

In einer weiteren bevorzugten Ausführungsform wird die Benutzer-Zuordnung, die bei der Konfiguration die Anzahl von Container-Instanzen festgelegt wird, über die Beendigung des erfindungsgemäßen Verfahrens hinaus gespeichert. Auf diese Weise wird erreicht, dass bei einer erneuten Durchführung des Verfahrens auf die festgelegte Benutzer-Zuordnung zugegriffen werden kann, ohne dass diese erneut bestimmt bzw. festgelegt werden muss. Nichtsdestotrotz ist es auch möglich, dass bei jeder erneuten Durchführung des erfindungsgemäßen Verfahrens die Benutzer-Zuordnung neu implementiert wird. Auf diese Weise wird sichergestellt, dass zwischenzeitliche Veränderungen im Betriebssystem geeignet berücksichtigt werden.

In einer weiteren bevorzugten Ausgestaltung wird die container-basierte Applikation in einem Datennetz ausgeführt, wobei das Datennetz vorzugsweise zur Steuerung einer Automatisierungsanlage vorgesehen ist. Die Erfindung kommt somit vorzugsweise im industriellen Umfeld zum Einsatz.

In einer bevorzugten Variante ist das Datennetz, in dem die container-basierte Applikation ausgeführt wird, ein sog. Edge-Computing-Netzwerk mit einer Vielzahl von Edge-Knoten bzw. Edge-Geräten, wobei die container-basierte Applikation auf einem Edge-Gerät der Vielzahl von Edge-Geräten ausgeführt wird und die zumindest eine Speicherpartition auf dem Edge-Gerät vorgesehen ist. Edge-Computing-Netzwerke sind an sich aus dem Stand der Technik bekannt. Solche Netzwerke kommen häufig in industriellen Anwendungen zum Einsatz. Nichtsdestotrotz ist die Erfindung nicht auf Edge-Computing-Netzwerke beschränkt und sie kann auch in anderen Datennetzen, wie z.B. cloud-basierten Netzen, zum Einsatz kommen.

Neben dem oben beschriebenen Verfahren betrifft die Erfindung ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Darüber hinaus betrifft die Erfindung ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

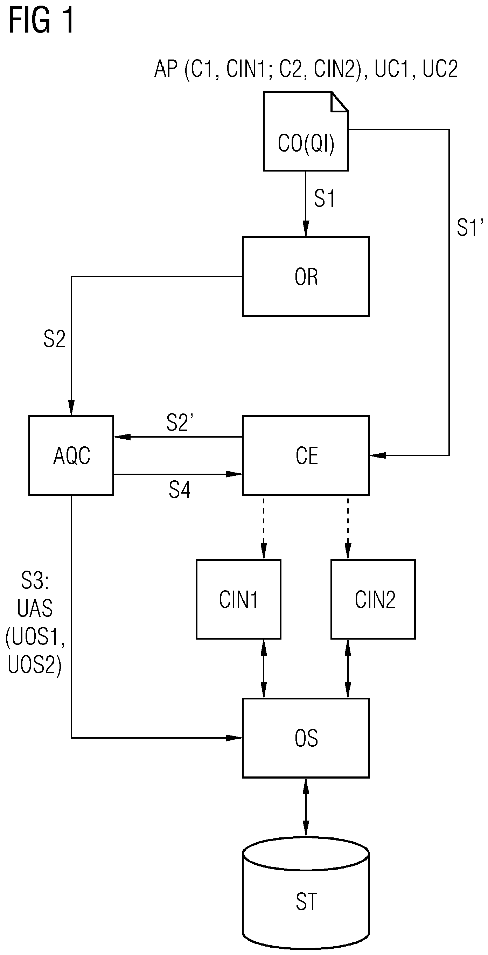

Ein Ausführungsbeispiel der Erfindung wird nachfolgend anhand der beigefügten Fig. 1 detailliert beschrieben. Diese Figur zeigt eine schematische Darstellung, die den Ablauf einer Variante des erfindungsgemäßen Verfahrens wiedergibt.

Die im Folgenden an Fig. 1 erläuterte Ausführungsform der Erfindung betrifft die Beschränkung von persistentem Speicher für eine container-basierten Applikation AP, die beispielhaft die Software-Container C1 und C2 enthält. Die Applikation AP wird mit einer an sich bekannten Container-Laufzeitumgebung auf dem Betriebssystem OS ausgeführt. Hierfür wird eine Container-Instanz CIN1 des Containers C1 und eine Container-Instanz CIN2 des Containers C2 mittels der Container-Laufzeitumgebung CE gestartet. Ohne Beschränkung der Allgemeinheit wird im Folgenden davon ausgegangen, dass das Betriebssystem OS Linux ist.

Die container-basierte Applikation kann auf einer an sich bekannten Containerisierungstechnologie beruhen. Vorzugsweise wird die Software "Docker" als Containerisierungstechnologie genutzt. Die container-basierte Applikation AP kann z.B. eine Applikation in einem Cloud-Computing-Netzwerk sein. Vorzugsweise läuft die Applikation jedoch in einem Edge-Computing-Netzwerk, bei dem - im Unterschied zu einem Cloud-Computing-Netzwerk - lokal Operationen am Rand des Netzwerks in sog. Edge-Knoten bzw. Edge-Geräten durchgeführt werden, wobei die Applikation AP auf einem der Edge-Geräte läuft.

In an sich bekannter Weise ist der Container-Instanz CIN1 ein Benutzer UC1 und der Container-Instanz CIN2 ein Benutzer UC2 zugeordnet, wobei es sich bei den Benutzern um technische (nicht-menschliche) Benutzer handelt, für welche eine entsprechende Berechtigung zum Ausführen der zugehörigen Container-Instanzen CIN1 bzw. CIN2 hinterlegt ist. Die Benutzer UC1 und UC2, welche erste Benutzer im Sinne von Anspruch 1 darstellen, sind container-spezifische Benutzer, die lokal bzw. gekapselt für die Container-Instanzen CIN1 und CIN2 definiert sind. Das heißt, der Benutzer UC1 ist ein container-spezifischer Benutzer für den Container C1 bzw. die entsprechenden Container-Instanz CIN1 und der Benutzer UC2 ist ein container-spezifischer Benutzer für den Container C2 bzw. die entsprechende Container-Instanz CIN2. Gegebenenfalls kann eine jeweilige Container-Instanz auch mehrere Benutzer enthalten, denen jeweils separat ein oder mehrere Prozesse zugewiesen sind, die durch die jeweilige Container-Instanz ausgeführt werden.

Vor dem Ausführen der Applikation AP bzw. dem Start der entsprechenden Container-Instanzen CIN1 und CIN2 wird eine Konfiguration der Container-Instanzen basierend auf den zugrundeliegenden Containern vorgenommen. Zur Konfiguration wird eine Konfigurationsinformation CO in der Form einer entsprechenden Konfigurationsdatei genutzt, welche neben an sich bekannten Konfigurationseinstellungen auch eine Begrenzungs-Information QI enthält, die für die jeweiligen container-spezifischen Benutzer UC1 und UC2 eine entsprechende Begrenzung ihres verwendbaren persistenten Speicherplatzes auf einer Speicherpartition eines physikalischen Speichers ST im zugrundeliegenden Betriebssystems OS festlegt.

In der Ausführungsform der Fig. 1 wird ein an sich bekannter Orchestrator OR (z.B. Kubernetes) verwendet, der mehrere Container-Laufzeitumgebungen verwaltet und nach bestimmten Kriterien die Laufzeitumgebung auswählt, welche die Applikation AP ausführt. In Fig. 1 ist dies die dargestellte Laufzeitumgebung CE (CE = Container Engine). Gemäß dem als Pfeil angedeuteten Schritt S1 der Fig. 1 wird die Konfigurationsinformation CO zusammen mit der Begrenzungs-Information QI an den Orchestrator OR übergeben, der die Begrenzungs-Information QI zusammen mit einem eindeutigen Bezeichner für die zu konfigurierenden Container-Instanzen CIN1 und CIN2 an eine Konfigurationskomponente AQC übergibt, wie durch den als Pfeil angedeuteten Schritt S2 verdeutlicht wird. Der eindeutige Bezeichner für die jeweilige Container-Instanz kann sich aus dem Namen der Applikation und des Containers zusammensetzen. Wird beispielsweise der an sich bekannte Orchestrator Kubernetes verwendet, kann der eindeutige Bezeichner aus einer Kombination aus Namensraum, Podname und Container-Name gebildet sein.

In einer alternativen Ausführungsform kann der Orchestrator OR auch weggelassen werden, wobei in diesem Fall die Container-Laufzeitumgebung CE zur Ausführung der Applikation AP fest vorgegeben ist. Ohne Orchestrator wird die Konfigurationsinformation CO zusammen mit der Begrenzungs-Information QI direkt an die Container-Laufzeitumgebung CE übergeben (Schritt Sl'), die dann die Begrenzungs-Information QI zusammen mit einem eindeutigen Bezeichner der zu konfigurierenden Container-Instanzen CIN1 und CIN2 an die Komponente AQC übergibt (Schritt S2').

Wie oben erwähnt, enthält die Begrenzungs-Information QI für jeden der vorhandenen container-spezifischen Benutzer UC1 und UC2 eine Speicherbegrenzung. In der hier beschriebenen Ausführungsform sind die Speicherbegrenzungen basierend auf maximalen Speichergrößen für container-spezifische Verzeichnisse der jeweiligen Benutzer definiert, wobei die container-spezifischen Verzeichnisse jeweils mit dem persistenten Speicher einer entsprechenden Speicherpartition im Speicher ST verknüpft sind. Es existieren somit für den Benutzer UC1 ein oder mehrere, für die Container-Instanz CIN1 spezifische Verzeichnisse, die einer Speicherpartition des Betriebssystems OS zugeordnet sind. In gleicher Weise existieren für den container-spezifischen Benutzer UC2 ein oder mehrere Verzeichnisse, die für die Container-Instanz CIN2 spezifisch sind und die einer Speicherpartition des Betriebssystems OS zugeordnet sind. Mit anderen Worten wird in der Begrenzungs-Information QI definiert, von welchen Quellverzeichnissen der Speicherpartition welche Zielcontainer mit entsprechenden Benutzern persistente Verzeichnisse in welche Container-Verzeichnisse gemounted bekommen sollen. Wie erwähnt, geben in der hier beschriebenen Ausführungsform die Speicherbegrenzungen für die container-spezifischen Benutzer eine maximale Speichergröße an, jedoch kann die Speicherbegrenzung auch auf andere Weise definiert werden, z.B. basierend auf einer Anzahl von Dateien, die maximal in die entsprechende Speicherpartition geschrieben werden darf.

Im Vorangegangenen wurde die Speicherbegrenzung der Benutzer der einzelnen Container-Instanzen basierend auf Container-Verzeichnissen definiert, denen jeweils ein begrenzter persistenter Speicher auf einer Speicherpartition des Betriebssystems OS zugeordnet ist. Gegebenenfalls kann die Speicherbegrenzung auch so definiert werden, dass für die jeweiligen Container-Instanzen direkt die Speicherpartition des Betriebssystems angegeben wird, die begrenzt werden soll.

In der hier beschriebenen Ausführungsform führt die Komponente AQC nach Erhalt der Begrenzungs-Information QI zunächst eine Überprüfung durch, ob die entsprechenden Speicherbegrenzungen in der Begrenzungs-Information QI gemäß bestimmten Zulässigkeitskriterien überhaupt zulässig sind. Ein Zulässigkeitskriterium besteht dabei darin, dass alle container-spezifischen Verzeichnisse in den Speicherbegrenzungen der container-spezifischen Benutzer gleich groß sein müssen, sofern die Verzeichnisse zu der gleichen, im Speicher begrenzten Speicherpartition gehören. Somit sind solche Speicherbegrenzungen nicht zulässig, für deren container-spezifischen Verzeichnisse unterschiedliche Speichergrößen angegeben sind, wenn die Verzeichnisse auf der gleichen Speicherpartition des Betriebssystems OS gemounted werden.

Werden bestimmte Speicherbegrenzungen für nicht zulässig erachtet, werden in der hier beschriebenen Ausführungsform diese unzulässigen Speicherbegrenzungen nicht umgesetzt. Alternativ ist es auch möglich, dass die unzulässigen Speicherbegrenzungen derart angepasst werden, dass sie wieder zulässig werden. Haben beispielsweise für zwei Speicherbegrenzungen die entsprechenden container-spezifischen Verzeichnisse, welche der gleichen Speicherpartition des Betriebssystems zugeordnet sind, unterschiedliche maximale Speicherwerte, können alle Verzeichnisse auf den gleichen Speicherwert, beispielsweise den größten Speicherwert aller Verzeichnisse, gesetzt werden, wodurch die entsprechenden Speicherbegrenzungen wieder zulässig werden. In einer weiteren Variante ist es auch möglich, dass im Falle von unzulässigen Speicherbegrenzungen das Verfahren abgebrochen wird. Das heißt, es werden keine Container-Instanzen gestartet und die Applikation nicht zur Ausführung gebracht.

Nach Durchführung der oben beschriebenen Zulässigkeitsprüfung richtet die Komponente AQC nunmehr die Speicherbegrenzungen entsprechend der Begrenzungs-Information QI unter Rückgriff auf das Betriebssystem OS ein. Dabei wird für die Container-Instanzen CIN1 und CIN2, deren Benutzer OC1 bzw. OC2 einer entsprechenden Speicherbegrenzung unterliegen sollen, ein gemeinsamer Usernamespace eingerichtet. Usernamespaces stellen einen an sich bekannten Mechanismus aus dem Betriebssystem Linux dar. Ein Usernamespace beschreibt dabei eine eindeutige Abbildung von container-spezifischen Benutzern auf entsprechende Benutzer mit Benutzeridentitäten im Linux-Betriebssystem. Erfindungsgemäß wird die Abbildung derart gewählt, dass die Benutzeridentitäten in dem Linux-Betriebssystem OS nicht anderweitig für Prozesse des Betriebssystems vergeben sind. Die Erzeugung des Usernamespaces ist in Fig. 1 in Schritt S3 angedeutet. Gemäß diesem Schritt wird eine Benutzer-Zuordnung UAS in der Form eines Usernamespaces festgelegt, in dem der container-spezifische Benutzer UC1 dem Betriebssystem-Nutzer UOS1 zugeordnet wird und der container-spezifische Benutzer UC2 dem Betriebssystem-Nutzer UOS2 zugeordnet wird.

Mit Hilfe des Usernamespaces werden die container-spezifischen Benutzer einer Container-Instanz um einen Offset verschoben. Somit werden beispielsweise Schreiboperationen mit der container-spezifischen Benutzeridentität 0 innerhalb eines Usernamespaces auf dem darunterliegenden Betriebssystem mit der Benutzeridentität des Offsets durchgeführt. Der Offset wird beim Anlegen des Usernamespaces von der Komponente AQC geeignet spezifiziert, wobei hierfür die Komponente AQC die von dem Orchestrator OR in Schritt S2 bzw. von der Laufzeitumgebung CE in Schritt S2' übergebene Begrenzungs-Information QI nutzt. Die Interaktion zwischen der Laufzeitumgebung bzw. dem Orchestrator und der Komponente AQC kann beispielsweise mit Hilfe von Plugins erfolgen. Der obige Offset wird ermittelt, indem die Komponente AQC die container-spezifischen Benutzeridentitäten auswertet und hieraus errechnet, wie groß der Abstand zum nächsten Usernamespace sein muss. In einer abgewandelten Ausführungsform können für die einzelnen container-spezifischen Benutzer ggf. auch Benutzergruppen festgelegt werden, d.h. ein jeweiliger Benutzer ist einer Benutzergruppe zugeordnet. Dabei wird einheitlich für eine Benutzergruppe eine entsprechende Speicherbegrenzung festgelegt werden, die dann für alle container-spezifischen Benutzer der Benutzergruppe gültig ist, wodurch das Verfahren vereinfacht wird.

In einem nächsten Schritt S4 wird der Usernamespace bzw. die Benutzer-Zuordnung UAS, die im Schritt S3 durch die Komponente AQC ermittelt wurde, an die Laufzeitumgebung CI übergeben, die dann die entsprechenden Speicherbegrenzungen gemäß der Begrenzungs-Information QI unter Verwendung des Usernamespaces implementiert. Dabei werden die Speicherbegrenzungen nicht basierend auf die container-spezifischen Benutzern UC1, UC2 innerhalb des Usernamespaces und somit im Container vergeben, sondern basierend auf den tatsächlichen Benutzern bzw. Benutzeridentitäten UOS1, UOS2 des darunterliegenden Betriebssystems OS. Zum Beispiel wird bei einem Offset im Usernamespace von 2000 für den container-spezifischen Benutzer mit der Benutzeridentität 0 eine Speicherbegrenzung auf der Benutzeridentität 2000 des Betriebssystems OS und nicht auf der Benutzeridentität 0 vergeben.

Im Rahmen der Implementierung des Usernamespaces werden die container-spezifischen Dateisysteme unter Verwendung des Usernamespaces eingehängt bzw. eingebunden. Anschließend werden die Container-Instanzen CIN1 und CIN2 gestartet, wie durch zwei gestrichelte Pfeile in Fig. 1 angedeutet ist. Mittels des Usernamespaces werden dabei die entsprechenden Speicherbegrenzungen im Betriebssystem OS umgesetzt. Mit anderen Worten werden Schreiboperationen der entsprechenden Container-Instanzen CIN1 und CIN2, die in Fig. 1 durch Doppelpfeile zwischen den Instanzen und dem Betriebssystem OS angedeutet sind, gemäß den Speicherbegrenzungen in der Begrenzungs-Information begrenzt, d.h. es wird sichergestellt, dass der persistente Speicher auf der entsprechenden Speicherpartition des physikalischen Speichers ST von den container-spezifischen Benutzern, die wiederum Betriebssystem-Benutzern zugeordnet sind, nicht über die Speicherbegrenzung hinaus beschrieben wird. Schreiboperationen, mit denen eine Speicherbegrenzung überschritten wird, werden somit für den jeweiligen Benutzer in der Container-Instanz nicht zugelassen.

In einer Variante des soeben beschriebenen Verfahrens wird die Benutzer-Zuordnung bzw. der Usernamespace UAS gespeichert, so dass er im Falle eines Neustarts der Applikation AP bzw. der entsprechenden Container-Instanzen CIN1 und CIN2 wieder zur Verfügung steht. Alternativ ist auch möglich, dass die Benutzer-Zuordnung bzw. der Usernamespace UAS bei jedem Neustart der Applikation AP neu berechnet wird, so dass die Zuordnung dynamisch angepasst wird und somit ggf. Veränderungen im Betriebssystem OS geeignet berücksichtigt werden. Sowohl bei der Wiederverwendung des Usernamespaces bzw. dessen Neuberechnung wird dabei sichergestellt, dass die Offset-Verschiebung mit dem Usernamespace beim Stoppen der entsprechenden Applikation wieder rückgängig gemacht wird, so dass der Usernamespace beim Neustart wieder richtig festgelegt wird.

Die im Vorangegangenen beschriebenen Ausführungsformen der Erfindung weisen eine Reihe von Vorteilen auf. Insbesondere wird die Möglichkeit geschaffen, die Menge an zur Verfügung stehendem persistenten Speicher für container-spezifische Benutzer von Container-Instanzen geeignet zu beschränken. Auf diese Weise wird vermieden, dass eine Container-Instanz, die beispielsweise von einem Angreifer im Rahmen einer DoS-Attacke (DoS = Denial of Service) gestartet wird, einen physikalischen Speicher komplett beschreibt, so dass andere Container-Instanzen, die auf dem gleichen physikalischen Speicher zugreifen, an deren Ausführung gehindert werden. In einer bevorzugten Variante wird ein an sich bekannter Mechanismus zur Implementierung der entsprechenden Speicherbegrenzungen in der Form eines Usernamespaces des Betriebssystems Linux genutzt. Der Usernamespace kann dabei ggf. dynamisch bei jedem Neustart der Applikation bzw. der entsprechenden Container-Instanzen vergeben werden. Gegebenenfalls kann ein ermittelter Usernamespace auch gespeichert werden, um bei einem Neustart der Applikation bzw. der zugehörigen Container-Instanzen wiederverwendet zu werden.

## Patentansprüche

1. Verfahren zur rechnergestützten Beschränkung von persistentem Speicher für eine container-basierte Applikation (AP), wobei der Applikation (AP) eine Anzahl von Container-Instanzen (CIN1, CIN2) zugeordnet ist, welche konfiguriert werden und anschließend zur Ausführung der Applikation (AP) auf einem vorgegebenen Betriebssystem (OS) gestartet werden, wobei in der Anzahl von Container-Instanzen (CIN1, CIN2) eine Anzahl von ersten Benutzern (UC1, UC2) enthalten ist, mit denen jeweils zumindest ein Prozess in der Anzahl von Container-Instanzen (CIN1, CIN2) nach deren Start ausgeführt wird, wobei ein jeweiliger erster Benutzer (UC1, UC2) ein container-spezifischer Benutzer in einer entsprechenden Container-Instanz (CIN1, CIN2) ist, wobei:
- zur Konfiguration der Anzahl von Container-Instanzen (CIN1, CIN2) eine Konfigurationsinformation (CO) bereitgestellt wird, welche für jeden ersten Benutzer (UC1, UC2) eine Speicherbegrenzung an persistentem Speicher auf zumindest einer Speicherpartition des vorgegebenen Betriebssystems (OS) festlegt;
- bei der Konfiguration der Anzahl von Container-Instanzen (CIN1, CIN2) eine Benutzer-Zuordnung (UAS) festgelegt wird, gemäß der jedem ersten Benutzer (UC1, UC2) ein anderer zweiter Benutzer (UOS1, UOS2) zugeordnet ist, der über die Anzahl von Container-Instanzen (CIN1, CIN2) eindeutig ist und für den die Speicherbegrenzung des jeweiligen ersten Benutzers (UC1, UC2) gültig ist, wobei ein jeweiliger zweiter Benutzer (UOS1, UOS2) ein Benutzer im vorgegebenen Betriebssystem (OS) ist, der im vorgegebenen Betriebssystem (OS) vor seiner Zuordnung zum ersten Benutzer (UC1, UC2) nicht verwendet wurde;
- die Anzahl von Container-Instanzen (CIN1, CIN2) basierend auf der Benutzer-Zuordnung (UAS) gestartet werden, wobei mithilfe des oder der zweiten Benutzer (UOS1, UOS2) die Speicherbegrenzung für jeden ersten Benutzer (UC1, UC2) eingehalten wird.

2. Verfahren nach Anspruch 1, **dadurch gekennzeichnet, dass** in der Konfigurationsinformation (CO) zumindest ein Teil der ersten Benutzer (UC1, UC1) der Anzahl von ersten Benutzern (UC1, UC2) einer oder mehreren Benutzergruppen zugewiesen ist, wobei jeder Benutzergruppe die gleiche Speicherbegrenzung für alle darin enthaltenen ersten Benutzer (UC1, UC2) zugewiesen ist.

3. Verfahren nach Anspruch 1 oder 2, **dadurch gekennzeichnet, dass** in der Konfigurationsinformation (CO) die Speicherbegrenzung für einen jeweiligen ersten Benutzer (UC1, UC2) der Anzahl von ersten Benutzern (UC1, UC2) für eine oder mehrere Verzeichnisse eines container-spezifischen Dateisystems festgelegt ist, wobei in der Konfigurationsinformation (CO) ferner die zumindest eine Speicherpartition des vorgegebenen Betriebssystems (OS) spezifiziert ist, die dem Verzeichnis oder den Verzeichnissen des container-spezifischen Dateisystems entspricht.

4. Verfahren nach einem der vorhergehenden Ansprüche, **dadurch gekennzeichnet, dass** das vorgegebene Betriebssystem (OS) Linux ist.

5. Verfahren nach Anspruch 4, **dadurch gekennzeichnet, dass** die Benutzer-Zuordnung (UAS) basierend auf einem Usernamespace festgelegt wird.

6. Verfahren nach einem der vorhergehenden Ansprüche, **dadurch gekennzeichnet, dass** die Konfigurationsinformation (CO) eine bereitgestellte Standard-Konfigurationsinformation ist, falls keine andere Konfigurationsinformation für die Applikation (AP) bereitgestellt wird.

7. Verfahren nach einem der vorhergehenden Ansprüche, **dadurch gekennzeichnet, dass** bei der Festlegung der Benutzer-Zuordnung (UAS) überprüft wird, ob die Speicherbegrenzung für einen jeweiligen ersten Benutzer (UC1, UC2) der Anzahl von ersten Benutzern (UC1, UC2) zulässig ist, wobei, falls eine oder mehreren unzulässigen Speicherbegrenzungen vorhanden sind, die unzulässigen Speicherbegrenzungen verworfen werden oder durch zulässige Speicherbegrenzungen ersetzt werden oder das Verfahren abgebrochen wird.

8. Verfahren nach einem der vorhergehenden Ansprüche, **dadurch gekennzeichnet, dass** die Benutzer-Zuordnung (UAS), die bei der Konfiguration der Anzahl von Container-Instanzen (CIN1, CIN2) festgelegt wird, über die Beendigung des Verfahrens hinaus gespeichert wird.

9. Verfahren nach einem der vorhergehenden Ansprüche, **dadurch gekennzeichnet, dass** die Applikation (AP) in einem Datennetz ausgeführt wird, wobei das Datennetz vorzugsweise zur Steuerung einer Automatisierungsanlage vorgesehen ist

10. Verfahren nach einem der vorhergehenden Ansprüche, **dadurch gekennzeichnet, dass** das Datennetz ein Edge-Computing-Netzwerk mit einer Vielzahl von Edge-Geräten ist, wobei die Applikation (AP) auf einem Edge-Gerät der Vielzahl von Edge-Geräten ausgeführt wird und die zumindest eine Speicherpartition des vorgegebenen Betriebssystems (OS) auf dem Edge-Gerät vorgesehen ist.

11. Computerprogrammprodukt mit einem auf einem maschinenlesbaren Träger gespeicherten Programmcode zur Durchführung eines Verfahrens nach einem der vorhergehenden Ansprüche, wenn der Programmcode auf einem Computer ausgeführt wird.

12. Computerprogramm mit einem Programmcode zur Durchführung eines Verfahrens nach einem der Ansprüche 1 bis 10, wenn der Programmcode auf einem Computer ausgeführt wird.
